# EUROPÄISCHE PATENTSCHRIFT

(11) **EP 1 662 090 B1**
(45) Veröffentlichungstag und Bekanntmachung des Hinweises auf die Patenterteilung: **26.08.2015**
(21) Anmeldenummer: 04028123.0
(22) Anmeldetag: 26.11.2004
(51) Int. Cl.: F01D 5/18, F01D 5/00, B23P 6/00, F01D 5/28

(54) **Turbinenschaufel einer Gasturbine**
Gas turbine blade
Aube d'une turbine à gaz

(43) Veröffentlichungstag der Anmeldung: 31.05.2006
(73) Patentinhaber: Siemens Aktiengesellschaft, 80333 München (DE)
(72) Erfinder: Baldauf, Stefan, Dr., 45481 Mülheim (DE)

(56) Entgegenhaltungen:
- DE-A1- 3 821 005
- DE-A1- 19 961 565
- US-A- 3 650 635
- US-A- 5 269 057
- US-B1- 6 328 531

## Beschreibung

Die Erfindung bezieht sich auf eine Turbinenschaufel einer Gasturbine. Sie bezieht sich ferner auf eine Gasturbine mit einer derartigen Turbinenschaufel.

Gasturbinen werden in vielen Bereichen zum Antrieb von Generatoren oder von Arbeitsmaschinen eingesetzt. Dabei wird der Energieinhalt eines Brennstoffs zur Erzeugung einer Rotationsbewegung einer Turbinenwelle genutzt. Der Brennstoff wird dazu in einer Anzahl von Brennern verbrannt, wobei von einem Luftverdichter verdichtete Luft zugeführt wird. Durch die Verbrennung des Brennstoffs wird ein unter hohem Druck stehendes Arbeitsmedium mit einer hohen Temperatur erzeugt. Dieses Arbeitsmedium wird in eine dem jeweiligen Brenner nachgeschaltete Turbineneinheit geführt, wo es sich arbeitsleistend entspannt.

Die Turbineneinheit einer Gasturbine weist zur Impulsübertragung des Arbeitsmediums auf die Turbinenwelle eine Anzahl von mit der Turbinenwelle verbundenen, rotierbaren Laufschaufeln auf. Die Laufschaufeln sind dazu kranzförmig an der Turbinenwelle angeordnet und bilden somit eine Anzahl von Laufschaufelkränzen oder Laufschaufelreihen. Die Turbine und der Verdichter sind auf einer gemeinsamen, auch als Turbinenläufer bezeichneten Turbinenwelle angeordnet, mit der auch der Generator bzw. die Arbeitsmaschine verbunden ist, und die um ihre Mittelachse drehbar gelagert ist.

Weiterhin umfasst die Turbineneinheit üblicherweise eine Anzahl von feststehenden Leitschaufeln, die ebenfalls kranzförmig unter der Bildung von Leitschaufelkränzen oder Leitschaufelreihen an einem Innengehäuse bzw. dem Stator der Turbine befestigt sind. Die Laufschaufeln dienen dabei zum Antrieb der Turbinenwelle durch Impulsübertrag vom die Turbine durchströmenden Arbeitsmedium. Die Leitschaufeln dienen hingegen zur Strömungsführung des Arbeitsmediums zwischen jeweils zwei in Strömungsrichtung des Arbeitsmediums gesehen aufeinanderfolgenden Laufschaufelreihen oder Laufschaufelkränzen. Ein aufeinanderfolgendes Paar aus einem Kranz von Leitschaufeln oder einer Leitschaufelreihe und aus einem Kranz von Laufschaufeln oder einer Laufschaufelreihe wird dabei auch als Turbinenstufe bezeichnet.

Eine Leitschaufel weist in der Regel eine auch als Schaufelfuß bezeichnete Plattform auf, die zur Fixierung der jeweiligen Leitschaufel am Innengehäuse der Turbine als Wandelement angeordnet ist und die die äußere Begrenzung eines Heißgaskanals für das die Turbine durchströmende Arbeitsmedium bildet. Für eine effiziente Strömungsführung des Arbeitsmediums in Richtung auf die sich einer Leitschaufelreihe anschließende Laufschaufelreihe weist eine der Leitschaufelreihe zugeordnete Leitschaufel üblicherweise ein gewölbtes, flügelförmiges Querschnittsprofil auf, so dass bei möglichst gering gehaltenen Reibungsverlusten an der jeweiligen Leitschaufel sich die vorgesehene Strömungsführung einstellt und somit die Leitschaufelreihe bzw. die ihr zugeordnete Turbinenstufe einen möglichst hohen Wirkungsgrad besitzt. Dazu weist die Vorderkante einer Leitschaufel einen runden Querschnitt auf, der sich zur spitz zulaufenden Hinterkante der Leitschaufel verjüngt. Eine Laufschaufel ist ähnlich geformt, wobei in der Regel spezifische Details wie etwa die maximale Profildicke, der Krümmungsradius an der Vorderkante usw. an den Einsatzzweck angepasst, d. h. für eine besonders effiziente Impulsübertragung vom Arbeitsmedium auf die jeweilige Laufschaufel optimiert sind.

Bei der Auslegung oben beschriebener Gasturbinen ist zusätzlich zur erreichbaren Leistung üblicherweise ein besonders hoher Wirkungsgrad ein Auslegungsziel. Eine Erhöhung des Wirkungsgrades lässt sich dabei aus thermodynamischen Gründen grundsätzlich durch eine Erhöhung der Temperatur erreichen, mit dem das Arbeitsmedium von der Brennkammer ab- und in die Turbineneinheit einströmt. Daher werden Temperaturen von etwa 1200 °C bis 1500 °C für derartige Gasturbinen angestrebt und auch erreicht.

Bei derartig hohen Temperaturen des Arbeitsmediums sind jedoch die diesem Medium ausgesetzten Komponenten und Bauteile hohen thermischen Belastungen ausgesetzt. Um dennoch bei hoher Zuverlässigkeit eine vergleichsweise lange Lebensdauer der betroffenen Komponenten zu gewährleisten, ist üblicherweise eine Kühlung der betroffenen Komponenten, insbesondere der Turbinenschaufeln, notwendig. Um thermische Verspannungen des Materials zu verhindern, welche die Lebensdauer der Komponenten begrenzen, wird in der Regel angestrebt, eine möglichst gleichmäßige Kühlung der Komponenten zu erreichen. Als Kühlmittel kommt dabei üblicherweise Kühlluft zum Einsatz, auf die die Wärme der zu kühlenden Bauteile übertragen wird. Dabei kann die Kühlluft bei der so genannten Prallkühlung im Wesentlichen senkrecht auf eine zu kühlende Fläche geleitet werden oder bei der so genannten Filmkühlung entlang der zu kühlenden Fläche, d. h. im Wesentlichen tangential zu ihr, geführt werden. Weiterhin können zur konvektiven Kühlung von Turbinenkomponenten in diese integrierte Kühlluftkanäle vorgesehen sein. Schließlich lassen sich die verschiedenen Kühlkonzepte auch miteinander kombinieren.

Zur Kühlung der thermisch besonders stark belasteten Turbinenschaufeln, insbesondere der Leitschaufeln, wird üblicherweise Kühlluft in deren Inneres geleitet, so dass die Wände der jeweiligen Turbinenschaufel von innen her gekühlt werden. Zumindest ein Teil dieser Kühlluft wird durch Austrittsöffnungen in Strömungsrichtung des Arbeitsmediums nach hinten aus der Hinterkante der Turbinenschaufel aus dem Schaufelinneren herausgeblasen. Um die Hinterkante aerodynamisch günstig zu gestalten bzw. eine wirksame Kühlung der vergleichsweise schlanken Hinterkante mit der herausgeblasenen Kühlluft zu ermöglichen, ist unter Beibehaltung der aerodynamisch besonders günstigen Kontur auf der Saugseite des Schaufelblatts die ursprünglich im Hinterkantenbereich mit der saugseitigen Schaufelwand keilförmig zusammenlaufende druckseitige Schaufelwand so weit zurückgeschnitten, dass der über die Endkante der druckseitigen Schaufelwand überstehende Abschnitt der saugseitigen Schaufelwand eine so genannte Hinterkantenfahne mit geringer Dicke bildet. Diese Hinterkantengestaltung wird auch als "Cut-Back-Hinterkante" bezeichnet. Je nach Hersteller sind auch noch andere Bezeichnungen geläufig, wie z. B. "Pressure Side Bleed". Die Hinterkantenfahne wird mittels Filmkühlung durch die aus dem Spalt zwischen der Endkante der druckseitigen Schaufelwand und der Hinterkantenfahne der saugseitigen Schaufelwand ausströmende Kühlluft gekühlt. Unterbrochen werden die freistehenden Abschnitte der Hinterkantenfahne von auch als "Land" bezeichneten Versteifungsabschnitten oder Stegen, bei denen die druckseitige Schaufelwand zur Stabilisierung der Turbinenschaufel im Hinterkantenbereich jeweils bis zum Hinterkantenende ausgedehnt ist, so dass die Hinterkante dort vergleichsweise massiv gehalten ist.

Problematisch ist, dass trotz der Kühlung der Hinterkantenfahne in diesem Bereich Überhitzungen und Oxidationen auftreten können. Insbesondere eine dadurch verursachte Rissbildung wirkt sich lebensdauerbegrenzend aus. Bei einer Wartung der Turbinenschaufeln müssen daher häufig die Hinterkantenfahnen gekürzt werden, um Riss- und Oxidationsschäden zu beheben. Dadurch wird allerdings die Aerodynamik der jeweiligen Turbinenschaufel verändert, was das spätere Betriebsverhalten und den Wirkungsgrad der Gasturbine nachteilig beeinflussen kann.

Ein weiterer Nachteil von Turbinenschaufeln mit den beschriebenen Cut-Back-Hinterkanten ist, dass deren Herstellung vergleichsweise schwierig ist, weil bei der Herstellung der jeweiligen Turbinenschaufel aus einem Gussteil besonders häufig Fehlstellen an der vergleichsweise dünnen Hinterkantenfahne auftreten können. Daher müssen in der Regel bei der Herstellung der Gusskerne erhöhte Ausschussraten akzeptiert werden, so dass sich die Herstellung der Turbinenschaufeln entsprechend verteuert.

Aus der US 3,650,635 ist ein Reparaturverfahren für eine Turbinenleitschaufel bekannt. Die Turbinenleitschaufel weist ein Schaufelblatt mit einer Hinterkante auf, welches aufgrund der enormen thermischen als auch mechanischen Belastung beim Betrieb der Gasturbine verschleißen kann. Durch Wegschleifen einer verschlissenen Hinterkante kann der nicht mehr brauchbare Bestandteil der Turbinenschaufel entfernt werden, wonach der so hergestellte Freiraum mit einer so genannten Ersatzhinterkante aufgefüllt werden kann. Die Ersatzhinterkante entspricht einer neuwertigen Hinterkante und wird an den verbliebenen Teil der Turbinenleitschaufel angeschweißt.

Ferner ist aus der US 6,328,531 B1 eine einstückige Turbinenlaufschaufel mit einem profilierten Schaufelblatt bekannt, an deren Hinterkantenbereich die saugseitige Schaufelblattwand gegenüber der druckseitigen Schaufelwand geringfügig verlängert ist und dabei eine Hinterkantenausblasung für Kühlluft aufweist.

Der Erfindung liegt daher die Aufgabe zugrunde, eine Turbinenschaufel der oben genannten Art für eine Gasturbine anzugeben, die bei gering gehaltenem Fertigungsaufwand eine möglichst hohe Lebensdauer aufweist.

Bezüglich der Turbinenschaufel wird die Aufgabe erfindungsgemäß gelöst, indem die saugseitige Schaufelwand der Turbinenschaufel mehrkomponentig gemäß den Merkmalen des Anspruchs 1 ausgeführt ist.

Die Erfindung geht dabei von der Überlegung aus, dass die Lebensdauer einer Turbinenschaufel insbesondere durch die betriebsgemäß hohe thermische Beaufschlagung mit heißem Arbeitsmedium begrenzt wird. Demzufolge sollten für eine hohe Lebensdauer Materialien gewählt werden, die auch vergleichsweise hohen thermischen Belastungen ohne ein nennenswertes Auftreten von Rissen oder Oxidationsschäden standhalten. Derartige Materialien sind jedoch bei der Herstellung und Bearbeitung, beispielsweise beim Gießen, nur mit erhöhtem Aufwand zu handhaben, was in einem entsprechend erhöhten Fertigungsaufwand resultiert. Um die somit grundsätzlich gegenläufigen Auslegungsziele einer erhöhten thermischen Belastbarkeit einerseits und eines gering gehaltenen Fertigungsaufwands andererseits gleichermaßen erreichen zu können, sollte die Turbinenschaufel in ihrem strukturellen Aufbau eine entsprechende Anzahl von Freiheitsgraden aufweisen. Dabei ist insbesondere der Erkenntnis Rechnung getragen, dass erhöhte Anforderungen an die Materialeigenschaften für eine lange Lebensdauer insbesondere in denjenigen Bereichen zu stellen sind, wo bei hoher thermischer Belastung die Bauteile vergleichsweise dünnwandig ausgeführt sein müssen. In denjenigen Bereichen, wo vergleichsweise dickwandige Strukturen möglich und zur Erfüllung einer tragenden Funktion auch notwendig sind, sind die Materialanforderungen hinsichtlich Oxidationsbeständigkeit und thermischer Belastbarkeit geringer. Demzufolge sind die Anforderungen für eine hohe Lebensdauer der Turbinenschaufel insgesamt auch bei gering gehaltenem Fertigungsaufwand erfüllbar, indem die Turbinenschaufel mehrkomponentig ausgeführt ist, wobei in der Art zusätzlicher Freiheitsgrade jede Komponente zielgerichtet auf die beispielsweise von den lokalen Umgebungsbedingungen vorgegebenen Besonderheiten hin ausgelegt sein kann.

Für eine hitzebeständige Verbindung der Hinterkantenfahne mit der Turbinenschaufel kommen verschiedene Arten warmfester Verbindungen in Betracht. Vorteilhafterweise werden die beiden Komponenten miteinander verlötet. Neben der Naht, die die Hinterkantenfahne mit der restlichen saugseitigen Schaufelwand bildet, können auch am Schaufelkörper angeordnete Verstrebungselemente geeignete Lötflächen für eine sichere Befestigung der Hinterkantenfahne aufweisen.

Für eine einfache Herstellung und Anpassung an die jeweilige Turbinenschaufel ist als Hinterkantenfahne zweckmäßigerweise ein längliches Flachstück vorgesehen. Dieses kann für die Feinanpassung an die Turbinenschaufel entsprechend zugeschliffen werden.

Für eine hohe Temperaturbeständigkeit und damit eine hohe Lebensdauer ist die Hinterkantenfahne vorzugsweise im Wesentlichen aus Keramik hergestellt. Dabei können insbesondere auf Keramik basierende Hochleistungs-Verbundwerkstoffe oder Werkstoffe aus so genannter Ingenieurkeramik zum Einsatz kommen, die sich neben einer besonders hohen Oxidationsbeständigkeit auch durch gute Verarbeitbarkeit auszeichnen. Auch andere Materialien, z. B. metallische, faserige oder kristalline, kommen in Betracht, sofern sie entsprechende Eigenschaften aufweisen.

Bezüglich des Reparaturverfahrens für die Turbinenschaufel wird die Aufgabe gelöst, indem die Hinterkantenfahne ausgewechselt wird. Dazu wird die Verbindung der verschlissenen Hinterkantenfahne mit dem Schaufelkörper gelöst und ein neues oder neuwertiges Bauteil eingesetzt. Durch das Auswechseln der Hinterkantenfahne wird die ursprüngliche Profilgeometrie im Bereich der Hinterkante wiederhergestellt, so dass das Betriebsverhalten und die Leistungsdaten einer derart reparierten oder überholten Turbinenschaufel weitestgehend denjenigen eines Neuteils entsprechen.

Die beschriebene Turbinenschaufel, bei der die Hinterkantenfahne eine separate Komponente der Schaufelwand bildet, ist zweckmäßigerweise Bestandteil einer Gasturbine. Insbesondere kann es sich bei der Turbinenschaufel um eine Leitschaufel handeln. Vorzugsweise sind jeweils eine Anzahl dieser Leitschaufeln in einer Anzahl von Leitschaufelreihen zusammengefasst. Entsprechendes gilt im Falle von Laufschaufeln. Insbesondere kann eine mit konventionellen Turbinenschaufeln ausgestattete Gasturbine durch das beschriebene Reparaturverfahren für die Turbinenschaufeln auf besonders günstige Weise ertüchtigt werden.

Die mit der Erfindung erzielten Vorteile bestehen insbesondere in der Möglichkeit, durch die Ausführung der Hinterkantenfahne einer Turbinenschaufel als separate Komponente oder separates Bauteil einerseits die Herstellung der Turbinenschaufel zu vereinfachen und dabei durch die niedrigeren Ausschussraten auch eine Kostenreduzierung zu ermöglichen. Andererseits ist durch die separate Ausführung der Hinterkantenfahne in der Art eines Einsatzteils eine unabhängige und an die jeweils unterschiedlichen Anforderungen an Temperaturbeständigkeit, Rissfestigkeit, Duktilität und Bearbeitbarkeit besonders angepasste Materialwahl und Herstellungsweise sowohl für die Hinterkantenfahne als auch für die restliche Turbinenschaufel möglich, so dass die Haltbarkeit bzw. die Lebensdauer der gesamten Turbinenschaufel erhöht werden kann. Aufgrund der erhöhten Temperaturbeständigkeit einer beispielsweise aus Keramik gefertigten Hinterkantenfahne kann Kühlluft eingespart und damit der Wirkungsgrad der Turbineneinheit erhöht werden.

Der beschriebene Aufbau der Turbinenschaufel begünstigt außerdem ihre Reparatur, so dass bei einer vergleichsweise einfach zu bewerkstelligenden Auswechslung der Hinterkantenfahne die ursprünglichen Leistungseigenschaften wiederhergestellt werden können. Weiterhin können herkömmliche Turbinenschaufeln durch den Anbau einer jeweils separat hergestellten Hinterkantenfahne ertüchtigt werden, so dass sich die Leistungsdaten entsprechender Neuteile erreichen lassen. Ein Austausch der gesamten Turbinenschaufel bzw. eine die Leistungseigenschaften verschlechternde Reparatur durch Kürzen der in ihrem Endbereich verschlissenen Hinterkantenfahne entfällt.

Ein Ausführungsbeispiel der Erfindung wird anhand einer Zeichnung näher erläutert. Darin zeigen:
- FIG 1: einen Längsschnitt durch eine Gasturbine,

- FIG 2: eine teilgeschnittene Seitenansicht einer Turbinenschaufel der Gasturbine nach FIG 1, und
- FIG 3: einen Ausschnitt aus dem Querschnitt der Turbinenschaufel nach FIG 2.

Gleiche Teile sind in allen Figuren mit denselben Bezugszeichen versehen.

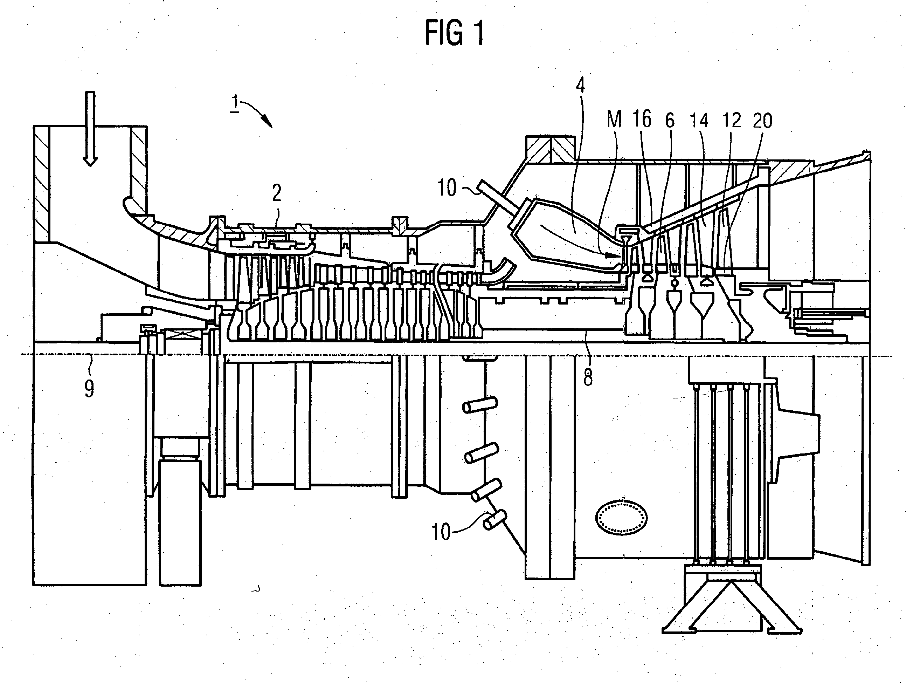

Die Gasturbine 1 gemäß FIG 1 weist einen Verdichter 2 für Verbrennungsluft, eine Brennkammer 4 sowie eine Turbine 6 zum Antrieb des Verdichters 2 und eines nicht dargestellten Generators oder einer Arbeitsmaschine auf. Dazu sind die Turbine 6 und der Verdichter 2 auf einer gemeinsamen, auch als Turbinenläufer bezeichneten Turbinenwelle 8 angeordnet, mit der auch der Generator bzw. die Arbeitsmaschine verbunden ist, und die um ihre Mittelachse 9 drehbar gelagert ist.

Die in der Art einer Ringbrennkammer ausgeführte Brennkammer 4 ist mit einer Anzahl von Brennern 10 zur Verbrennung eines flüssigen oder gasförmigen Brennstoffs bestückt. Sie ist weiterhin an ihrer Innenwand mit nicht näher dargestellten Hitzeschildelementen versehen.

Die Turbine 6 weist eine Anzahl von mit der Turbinenwelle 8 verbundenen, rotierbaren Laufschaufeln 12 auf. Die Laufschaufeln 12 sind kranzförmig an der Turbinenwelle 8 angeordnet und bilden somit eine Anzahl von Laufschaufelreihen. Weiterhin umfasst die Turbine 6 eine Anzahl von feststehenden Leitschaufeln 14, die ebenfalls kranzförmig unter der Bildung von Leitschaufelreihen an einem Innengehäuse 16 der Turbine 6 befestigt sind. Die Laufschaufeln 12 dienen dabei zum Antrieb der Turbinenwelle 8 durch Impulsübertrag vom die Turbine 6 durchströmenden Arbeitsmedium M. Die Leitschaufeln 14 dienen hingegen zur Strömungsführung des Arbeitsmediums M zwischen jeweils zwei in Strömungsrichtung des Arbeitsmediums M gesehen aufeinanderfolgenden Laufschaufelreihen oder Laufschaufelkränzen. Ein aufeinander folgendes Paar aus einem Kranz von Leitschaufeln 14 oder einer Leitschaufelreihe und aus einem Kranz von Laufschaufeln 12 oder einer Laufschaufelreihe wird dabei auch als Turbinenstufe bezeichnet.

Jede Leitschaufel 14 weist eine auch als Schaufelfuß bezeichnete Plattform 18 auf, die zur Fixierung der jeweiligen Leitschaufel 14 am Innengehäuse 16 der Turbine 6 als Wandelement angeordnet ist. Die Plattform 18 ist dabei ein thermisch vergleichsweise stark belastetes Bauteil, das die äußere Begrenzung eines Heißgaskanals für das die Turbine 6 durchströmende Arbeitsmedium M bildet. Jede Laufschaufel 12 ist in analoger Weise über eine auch als Schaufelfuß bezeichnete Plattform 20 an der Turbinenwelle 8 befestigt.

Zur Erzielung eines vergleichsweise hohen Wirkungsgrades ist die Gasturbine 1 für eine vergleichsweise hohe Austrittstemperatur des aus der Brennkammer 4 austretenden Arbeitsmediums M von etwa 1200 °C bis 1500 °C ausgelegt. Um dabei auch eine hohe Lebensdauer oder Betriebsdauer der Gasturbine 1 zu gewährleisten, sind deren wesentliche Komponenten, insbesondere die Turbinenschaufeln 15 (d. h. die Leitschaufeln 14 und/oder die Laufschaufeln 12), kühlbar ausgebildet.

Zur Kühlung einer Turbinenschaufel 15, insbesondere einer Leitschaufel 14, wird Kühlluft K verwendet, die ins Innere der Turbinenschaufel 15 geleitet wird, um insbesondere die Außenwände von innen her zu kühlen. Ein Teil dieser Kühlluft K wird aus endseitig angeordneten Austrittsöffnungen der Turbinenschaufel 15 heraus geblasen, um den besonders hitzeempfindlichen Hinterkantenbereich 21 mit der Hinterkante 22 zu kühlen.

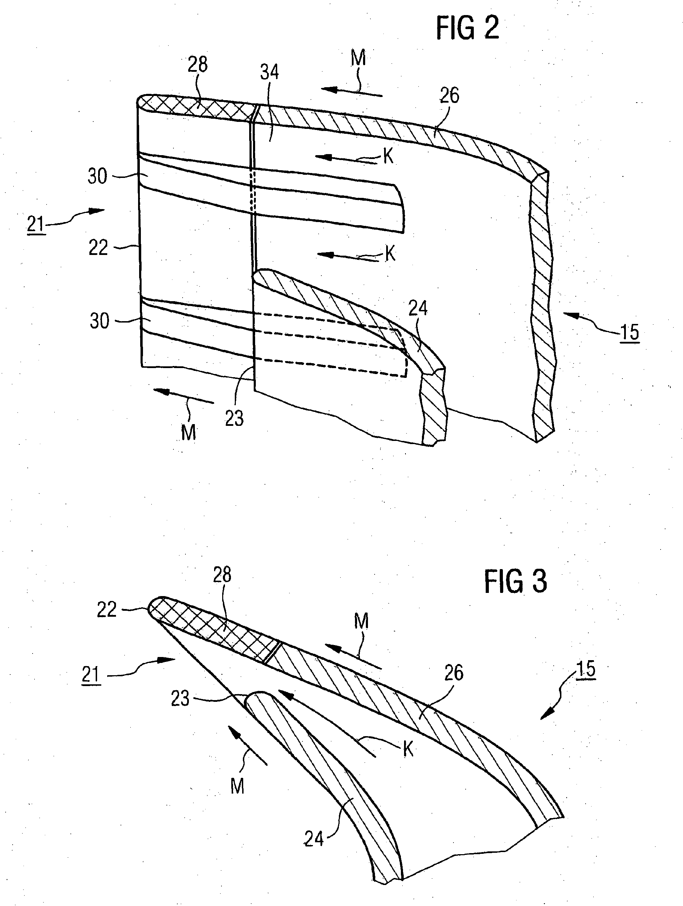

In den FIG 2 und 3 ist daher zur näheren Erläuterung des Kühlsystems der Turbinenschaufeln 15 im Bereich der Hinterkante 22 eine Turbinenschaufel 15 dargestellt, wobei FIG 2 eine teilgeschnittene Seitenansicht der Turbinenschaufel 15 und FIG 3 einen Querschnitt durch das Schaufelprofil zeigt. Wie aus den Figuren zu entnehmen ist, wird die Turbinenschaufel 15 auf beiden Seiten vom Arbeitsmedium M in Richtung der Hinterkante 22 umströmt, wobei das Schaufelprofil bezüglich des Arbeitsmediums M von der druckseitigen Schaufelwand 24 und der druckabgewandten oder saugseitigen Schaufelwand 26 begrenzt wird. Für eine bei einem hohen aerodynamischen Wirkungsgrad auch bezüglich der Kühlung geeignete Ausgestaltung des Hinterkantenbereichs 21, weist die Turbinenschaufel 15 eine so genannte Cut-Back-Hinterkante auf, bei der die druckseitige Schaufelwand 24 von der Hinterkante 22 derart zurückversetzt ist, dass die saugseitige Schaufelwand 26 eine über die Endkante 23 der druckseitigen Schaufelwand 24 hinausragende Hinterkantenfahne 28 ausbildet. Diese Abschnitte mit einer freistehenden, beidseitig dem Arbeitsmedium M ausgesetzten Hinterkantenfahne 28 werden lediglich von den stabilisierend wirkenden Verstrebungselementen 30 unterbrochen, wobei der Hinterkantenbereich 21 in diesen so genannten "Land"-Abschnitten gemeinsam mit der bis zur Hinterkante 22 verlängerten druckseitigen Schaufelwand 24 gebildet wird. Es sind jedoch auch Varianten mit verkürzten oder nicht spitz zulaufenden Land-Abschnitten denkbar.

Bei dieser Cut-Back-Hinterkante wird die Hinterkantenfahne 28 bzw. die druckabgewandte oder saugseitige Schaufelwand 26 mit einem Kühlfilm aus Kühlluft K, die aus dem Innenraum der Turbinenschaufel 15 austritt, gekühlt. Dabei vermischt sich die Kühlluft K im Bereich der Hinterkantenfahne 28 mit dem druckseitig zuströmenden Arbeitsmedium M, so dass die Temperatur des entlang der Innenseite der druckabgewandten Schaufelwand 26 strömenden Kühlfilms im Bereich der Hinterkantenfahne 28 kontinuierlich ansteigt.

Um zu verhindern, dass hierdurch eine Überhitzung des Hinterkantenbereichs 21 mit der Hinterkante 22 der Turbinenschaufel 15 eintritt, die zu Rissen und anderen Beschädigungen führen kann, ist der Hinterkantenbereich 21 der Turbinenschaufel 15 spezifisch für eine besonders hohe Lebensdauer, insbesondere für eine hohe Beständigkeit gegenüber der Temperatur des heißen Arbeitsmediums M, ausgelegt. Dafür ist die Hinterkantenfahne 28 als separate Komponente der Turbinenschaufel 15 ausgebildet, so dass sie auf einfache Weise aus einem besonders hitzebeständigen Material gefertigt und ggf. nachbearbeitet und gehärtet werden kann. Im Ausführungsbeispiel ist die Hinterkantenfahne 28 aus Ingenieurkeramik gefertigt, die besonders hitzebeständig ist und eine hohe Festigkeit aufweist. Die restliche Turbinenschaufel 15 ist dagegen als Gussteil aus einer Nickelbasislegierung ausgeführt. Um die Hinterkantenfahne 28 sicher an der Turbinenschaufel 15 zu befestigen, ist diese mit der Turbinenschaufel 15 verlötet.

Um eine besonders gute Haltbarkeit der Verbindung zu erreichen, ist die Naht, an der die Hinterkantenfahne 28 mit der restlichen saugseitigen Schaufelwand 26 zusammenstößt, gegenüber der Normalenrichtung auf der Schaufelblattfläche angeschrägt, so dass sich eine besonders große Lötfläche zwischen beiden Komponenten ergibt. Im Ausführungsbeispiel liegt die Nahtstelle der Endkante 23 der druckseitigen Schaufelwand 24 ungefähr bündig gegenüber. Sie kann aber auch dagegen verschoben (insbesondere zur Vorderkante des Schaufelblatts hin) angeordnet sein.

Im Falle einer Beschädigung der Hinterkantenfahne 28 wird diese durch ein Neuteil ersetzt. Falls bei einer Turbinenschaufel 15 keine separate Hinterkantenfahne 28 vorgesehen ist, wird bei einer Beschädigung der Hinterkantenfahne 28 diese abgetragen bzw. von der Turbinenschaufel 15 entfernt und durch eine separate Hinterkantenfahne 28 der beschriebenen Art ersetzt.

## Patentansprüche

1. Turbinenschaufel (15) einer Gasturbine (1),
insbesondere eine Leitschaufel (14), mit einer saugseitigen Schaufelwand (26) und einer im Hinterkantenbereich (21) auf diese zulaufenden druckseitigen Schaufelwand (24),
**dadurch gekennzeichnet, dass**
die saugseitige Schaufelwand (26) mehrkomponentig ausgeführt ist und
eine Komponente der saugseitigen Schaufelwand (26) eine zumindest in einem Teilabschnitt des Hinterkantenbereichs (21) über die Endkante (23) der druckseitigen Schaufelwand (24) hinausragende Hinterkantenfahne (28) bildet,
wobei an der Hinterkantenfahne (28) und an der saugseitigen Schaufelwand (26) druckseitig angeordnete Verstrebungselemente (30) vorgesehen sind.

2. Turbinenschaufel (15) nach Anspruch 1,
wobei die Hinterkantenfahne (28) mit der oder den angrenzenden Komponenten der saugseitigen Schaufelwand (26) und/oder mit am Schaufelkörper angeordneten Verstrebungselementen (30) verlötet ist.

3. Turbinenschaufel (15) nach Anspruch 1 oder 2,
bei der als Hinterkantenfahne (28) ein längliches Flachstück vorgesehen ist.

4. Turbinenschaufel (15) nach einem der Ansprüche 1 bis 3,
wobei die Hinterkantenfahne (28) im Wesentlichen aus Keramik hergestellt ist.

5. Gasturbine (1) mit einer Anzahl von insbesondere jeweils zu Schaufelreihen zusammengefassten Turbinenschaufeln (15) nach einem der Ansprüche 1 bis 4.

## Claims

1. Turbine blade (15) for a gas turbine (1),
in particular a guide vane (14), with a suction-side blade wall (26) and a pressure-side blade wall (24) which comes to meet the former in the trailing edge region (21),
**characterized in that**
the suction-side blade wall (26) is of multi-component design and
one component of the suction-side blade wall (26) forms a trailing edge tab (28) which projects, at least in a partial section of the trailing edge region (21), beyond the trailing edge (23) of the pressure-side blade wall (24),
wherein bracing elements (30) are provided on the trailing edge tab (28) and on the pressure side of the suction-side blade wall (26).

2. Turbine blade (15) according to Claim 1,
wherein the trailing edge tab (28) is soldered to the adjoining component(s) of the suction-side blade wall (26) and/or to bracing elements (30) arranged on the blade body.

3. Turbine blade (15) according to Claim 1 or 2,
in which a longitudinal flat part is provided as trailing edge tab (28).

4. Turbine blade (15) according to one of Claims 1 to 3,
wherein the trailing edge tab (28) is made essentially from ceramic.

5. Gas turbine (1) having a number of turbine blades (15) according to one of Claims 1 to 4, which are in particular in each case assembled to form blade rows.

## Revendications

1. Aube ( 15 ) d'une turbine ( 1 à gaz, notamment aube ( 14 ) directrice, ayant une paroi ( 26 ) d'aube d'extrados et, allant vers celle-ci dans la partie ( 21 ) de bord arrière, une paroi ( 24 ) d'aube d'intrados,
**caractérisée en ce que**
la paroi ( 26 ) d'aube d'extrados est réalisée en plusieurs éléments et
un élément de la paroi ( 26 ) d'aube d'extrados forme, au moins dans un segment partiel de la partie ( 21 ) de bord arrière, un talon ( 28 ) de bord arrière, allant au-delà du bord ( 23 ) d'extrémité de la paroi ( 24 ) d' aube d'intrados. des éléments ( 30 ) d'entretoisement, disposés du côté de l'intrados, étant prévus sur le talon ( 28 ) du bord arrière et sur la paroi ( 26 ) d'aube d'extrados.

2. Aube ( 15 ) d'une turbine ( 1 ) suivant la revendication 1, dans laquelle le talon ( 28 ) bord arrière est brasé à l'élément ou aux éléments voisins de la paroi ( 26 ) d'aube d'extrados et/ou à des éléments ( 30 ) d'entretoisement disposés sur le corps de l'aube.

3. Aube ( 15 ) d'une turbine ( 1 ) suivant la revendication 1 ou 2,
dans laquelle une pièce plate oblongue est prévue comme talon ( 28 ) de bord arrière.

4. Aube ( 15 ) d'une turbine ( 1 ) suivant l'une des revendications 1 à 3,
dans laquelle le talon ( 28 ) de bord arrière est fabriqué essentiellement en céramique.

5. Turbine ( 1 ) à gaz ayant un certain nombre d'aubes ( 15 ) de turbine, rassemblées notamment respectivement en rangées d'aubes, suivant l'une des revendications 1 à 4.
